# EUROPÄISCHE PATENTSCHRIFT

(11) **EP 3 408 511 B1**
(45) Veröffentlichungstag und Bekanntmachung des Hinweises auf die Patenterteilung: **18.08.2021**
(21) Anmeldenummer: 17702032.8
(22) Anmeldetag: 23.01.2017
(51) Int. Cl.: F01N 11/00, F02D 41/22

(54) **VERFAHREN ZUR QUALITÄTSSICHERUNG EINES ABGASVERHALTENS IN EINEM KRAFTFAHRZEUG**
METHOD FOR THE QUALITY ASSURANCE OF EXHAUST GAS BEHAVIOUR IN A MOTOR VEHICLE
PROCÉDÉ D'ASSURANCE DE LA QUALITÉ DE L'ÉMISSION DE GAZ D'ÉCHAPPEMENT DANS UN VÉHICULE À MOTEUR

(30) Priorität: 25.01.2016 DE 102016200984
(43) Veröffentlichungstag der Anmeldung: 05.12.2018
(73) Patentinhaber: Bayerische Motoren Werke Aktiengesellschaft, 80809 München (DE)
(72) Erfinder: GARCON, Christian, 80686 München (DE); RANSBERGER, Marinus, 83737 Irschenberg (DE); FLENKER, Christian, 85604 Zorneding (DE)
(86) Internationale Anmeldenummer: PCT/EP2017/051287
(87) Internationale Veröffentlichungsnummer: WO 2017/129510

(56) Entgegenhaltungen:
- WO-A1-2014/001053
- DE-A1-102011 076 509
- DE-A1-102011 113 555
- DE-A1-102012 217 832
- US-A1- 2012 072 060
- Delphi: "Worldwide Emissions Standards Passenger Cars and Light Duty Vehicles Worldwide Emissions Standards Passenger Cars and Light Duty Vehicles Worldwide Emissions Standards Passenger Cars and Light Duty Vehicles", DELPHI North America, 31. Dezember 2015 (2015-12-31), Seiten 1-104, XP055363048, Gefunden im Internet: URL:http://delphi.com/docs/default-source/ catalogs/delphi-worldwide-emissions-standa rds-pc-ldv-15-16.pdf [gefunden am 2017-04-07]

## Beschreibung

Die vorliegende Erfindung betrifft ein Verfahren zur Qualitätssicherung eines Abgasverhaltens in einem Kraftfahrzeug und eine diesbezügliche Vorrichtung und ein diesbezügliches Kraftfahrzeug.

In Kraftfahrzeugen mit Verbrennungsmotoren werden sogenannte On-Board Diagnosen durchgeführt, um abgasrelevante Bauteile beziehungsweise Vorrichtungen überwachen zu können.

Für in den USA zugelassene Fahrzeuge besteht die gesetzliche Anforderung, dass eine bestimmte Diagnosehäufigkeit gewährleistet ist. Dabei wird die Diagnosehäufigkeit bezüglich der Anzahl an Fahrzyklen zum Modelljahr 2019 von 0.1 auf 0.336 erhöht.

Bei gleichem Fahrverhalten des Kunden müssen OBD-Funktionen somit mehr als dreimal so oft ablaufen, wie bisher. Dies kann insbesondere bei PHEVs zu Schwierigkeiten führen.

Somit besteht eine erhöhte Gefahr, dass die geforderten Diagnosehäufigkeiten im Schnitt nicht mehr erfüllt werden.

Daher wäre es wünschenswert eine Möglichkeit bereitzustellen, welche dazu geeignet ist, zu gewährleisten, dass die erhöhte Diagnosehäufigkeit von Diagnosen für abgasrelevante Vorrichtungen erfüllt werden kann.

Aus der WO 2014/001053 A1, der DE 10 2012 217832 A1 und der DE 10 2011 076509 A1 ist jeweils ein gattungsbildendes Verfahren bekannt.

Ferner ist aus der DE 10 2011 113 555 A1 ein Verfahren zur Qualitätssicherung eines Abgasverhaltens in einem Hybrid Kraftfahrzeug bekannt, welches bei Unterschreiten einer Schwellgrenze eines Diagnose-Ist-Soll-Verhältnisses bei einem nachfolgenden Fahrzyklus im Falle eines Einschaltens des Verbrennungsmotors diesen derart lange eingeschaltet hält, bis eine entsprechende Onboard-Diagnose erfolgreich durchgeführt worden ist.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch, sowie mittels eines Systems gemäß einem nebengeordneten Anspruch.

Der Gegenstand des Hauptanspruches betrifft dabei ein Verfahren zur Qualitätssicherung eines Abgasverhaltens in einem Kraftfahrzeug, vorzugsweise in einem Hybrid Kraftfahrzeug, insbesondere in einem Plug-In-Hybrid Kraftfahrzeug. Das Verfahren weist auf: Monitoren einer On-Board-Diagnosefunktion des Kraftfahrzeuges, wobei die On-Board-Diagnosefunktion relevant für das Abgasverhalten des Kraftfahrzeuges ist. Vorhalten eines Fahrtenzählers, wobei der Fahrtenzähler indikativ ist, für eine Anzahl an Fahrten des Kraftfahrzeuges. Vorhalten eines Diagnosezählers für die von dem Monitoring betroffene On-Board-Diagnosefunktion des Kraftfahrzeuges. Vorhalten eines Diagnosehäufigkeitssollwertes. Inkrementieren des Fahrtenzählers nach Beginn eines Fahrzyklus des Kraftfahrzeuges und einer vorbestimmten Fahrdauer des Kraftfahrzeuges. Bilden eines Diagnosehäufigkeitsistwertes, mittels einer geeigneten Kombination des Diagnosezählers mit dem Fahrtenzähler. Bilden einer Differenz des Diagnosehäufigkeitssollwertes von dem Diagnosehäufigkeitsistwert. Falls die gebildete Differenz des Diagnosehäufigkeitssollwertes von dem Diagnosehäufigkeitsistwert eine Differenzschwelle unterschreitet: Auswählen eines Steuerungsverfahrens aus einer Steuerungsverfahrensgruppe, wobei jedes Steuerungsverfahren der Steuerungsverfahrensgruppe indikativ für eine entsprechende Motoransteuerung eines Antriebsmotors des Kraftfahrzeuges ist. Dabei ist das ausgewählte Steuerungsverfahren dazu geeignet, eine aktuell laufende On-Board-Diagnose der On-Board-Diagnosefunktion erfolgreich abzuschließen beziehungsweise eine nicht laufende On-Board-Diagnose der On-Board-Diagnosefunktion erfolgreich einzuleiten und abzuschließen. Und das Verfahren weist nach Abschluss der On-Board Diagnose der On-Board-Diagnosefunktion ferner auf: Inkrementieren des Diagnosezählers der On-Board-Diagnosefunktion. Und zurücksetzen der Motoransteuerung auf eine ursprüngliche Motoransteuerung, gemäß einem Zustand vor der Auswahl des Steuerungsverfahrens.

Die Verfahrensschritte können dabei automatisiert ausgeführt werden.

Eine On-Board-Diagnosefunktion im Sinne der Erfindung kann dabei einen Vorgang aufweisen, der eine Diagnose einer abgasrelevanten Vorrichtung vornimmt, um die Funktionsweise der abgasrelevanten Vorrichtung zu überprüfen und/oder zu protokollieren. Dabei kann beispielsweise für jede abgasrelevante Vorrichtung des Kraftfahrzeuges zumindest eine entsprechende On-Bord-Diagnosefunktion vorgesehen sein.

Ein Diagnosehäufigkeitssollwert im Sinne der Erfindung kann dabei ein Wert sein, der festlegt, wie oft eine entsprechende Diagnose erfolgreich durchgeführt werden soll. Der Diagnosehäufigkeitssollwert kann dabei für jede Diagnosefunktion verschieden sein. Der Diagnosehäufigkeitssollwert kann dabei für jede Diagnosefunktion gleich sein.

Der Diagnosehäufigkeitssollwert kann dabei von einer Regulierungsbehörde vorgegeben sein.

Der Diagnosehäufigkeitssollwert kann dabei ein festgelegter Wert sein.

Ein Diagnosehäufigkeitsistwert im Sinne der Erfindung kann dabei ein Wert sein, der festhält, wie oft eine entsprechende Diagnose erfolgreich durchgeführt wurde.

Die entsprechende Durchführungshäufigkeit der entsprechenden Diagnose kann dabei bezogen auf die Anzahl der Fahrzyklen des Kraftfahrzeuges angegeben sein.

Eine vorbestimmte Fahrdauer des Kraftfahrzeuges im Sinne der Erfindung, kann dabei eine Zeitspanne sein, welche vergangen sein muss, damit ein Fahrzyklus als solcher gewertet wird.

Eine Differenzschwelle im Sinne der Erfindung, kann dabei einen Wert meinen, der Unterschritten oder Überschritten werden muss, um eine festgelegte Aktion durchzuführen beziehungsweise auszulösen. Die Differenzschwelle kann dabei ein festgelegter Wert sein.

Durch die erfindungsgemäße Lehre wird der Vorteil erreicht, dass gewährleistet werden kann, dass eine geforderte Diagnosehäufigkeit für eine entsprechende Diagnosefunktion des Kraftfahrzeuges eingehalten wird.

Ein weiterer Vorteil ist, dass dadurch etwaige Fehlfunktionen von abgasrelevanten Vorrichtungen des Kraftfahrzeuges innerhalb einer festgelegten Anzahl an Fahrzyklen erkannt werden kann.

Ein weiterer Vorteil ist, dass ein Abgasverhalten nachhaltend überprüft werden kann.

Der Gegenstand eines nebengeordneten Anspruches betrifft dabei Vorrichtung zur Qualitätssicherung eines Abgasverhaltens in einem Kraftfahrzeug, vorzugsweise in einem Hybrid Kraftfahrzeug, insbesondere in einem Plug-In-Hybrid Kraftfahrzeug. Dabei weist die Vorrichtung auf: Eine On-Board-Diagnosevorrichtung, mit einer On-Board-Diagnosefunktion, für eine On-Board Diagnose einer Funktionsfähigkeit einer abgasrelevanten Vorrichtung des Kraftfahrzeuges. Eine Monitoring-Vorrichtung, zum Überwachen der On-Board-Diagnosefunktion der On-Board-Diagnosevorrichtung des Kraftfahrzeuges. Eine Vorrichtung zum Vorhalten eines Fahrtenzählers, wobei der Fahrtenzähler indikativ ist, für eine Anzahl an Fahrzyklen des Kraftfahrzeuges, wobei die Vorrichtung zum Vorhalten des Fahrtenzählers dazu eingerichtet ist, ein Inkrementieren des Fahrtenzählers zu ermöglichen. Eine Vorrichtung zum Vorhalten eines Diagnosezählers für die von dem Monitoring betroffene On-Board-Diagnosefunktion des Kraftfahrzeuges, wobei die Vorrichtung zum Vorhalten des Diagnosezählers dazu eingerichtet ist, ein Inkrementieren des Diagnosezählers der On-Board-Diagnosefunktion zu ermöglichen. Eine Vorrichtung zum Vorhalten eines Diagnosehäufigkeitssollwertes. Eine Vorrichtung zum Bilden eines Diagnosehäufigkeitsistwertes, mittels einer geeigneten Kombination des Diagnosezählers mit dem Fahrtenzähler. Eine Vergleichsvorrichtung, zum Vergleichen des Diagnosehäufigkeitsistwertes mit dem Diagnosehäufigkeitssollwert. Eine Auswahlvorrichtung, zum Auswählen eines Steuerungsverfahrens aus einer Steuerungsverfahrensgruppe, wobei jedes Steuerungsverfahren der Steuerungsverfahrensgruppe indikativ für eine entsprechende Motoransteuerung eines Antriebsmotors des Kraftfahrzeuges ist, und wobei das ausgewählte Steuerungsverfahren dazu geeignet ist, eine aktuell laufende On-Board-Diagnose der On-Board-Diagnosefunktion erfolgreich abzuschließen und eine nicht laufende On-Board-Diagnose der On-Board-Diagnosefunktion erfolgreich einzuleiten und abzuschließen. Und eine Vorrichtung zum Zurücksetzen der Motoransteuerung auf eine ursprüngliche Motoransteuerung, gemäß einem Zustand vor der Auswahl des Steuerungsverfahrens. Und dabei ist die Vorrichtung dazu eingerichtet, irgendein erfindungsgemäßes Verfahren auszuführen.

Durch die erfindungsgemäße Lehre wird der Vorteil erreicht, dass eine Vorrichtung bereitgestellt werden kann, mit der gewährleistet werden kann, dass eine geforderte Diagnosehäufigkeit für eine entsprechende Diagnosefunktion des Kraftfahrzeuges eingehalten wird.

Ein weiterer Vorteil ist, dass dadurch etwaige Fehlfunktionen von abgasrelevanten Vorrichtungen des Kraftfahrzeuges innerhalb einer festgelegten Anzahl an Fahrzyklen erkannt werden kann.

Ein weiterer Vorteil ist, dass eine Nachrüstvorrichtung für ein Kraftfahrzeug bereitgestellt werden kann, welches gewährleisten kann, dass behördlich geforderte Diagnosehäufigkeiten eingehalten werden können.

Ein weiterer Vorteil ist, dass ein Abgasverhalten nachhaltend überprüft werden kann.

Ein weiterer Vorteil ist, dass eine Diagnosenotwendigkeitsprüfung erfolgt, bevor eine Diagnose angeschoben wird.

Der Gegenstand eines weiteren nebengeordneten Anspruches betrifft dabei ein Kraftfahrzeug, aufweisend eine erfindungsgemäße Vorrichtung.

Durch die erfindungsgemäße Lehre wird der Vorteil erreicht, dass ein Kraftfahrzeug bereitgestellt werden kann, mit dem gewährleistet werden kann, dass eine geforderte Diagnosehäufigkeit für eine entsprechende Diagnosefunktion des Kraftfahrzeuges eingehalten wird.

Ein weiterer Vorteil ist, dass dadurch etwaige Fehlfunktionen von abgasrelevanten Vorrichtungen des Kraftfahrzeuges innerhalb einer festgelegten Anzahl an Fahrzyklen erkannt werden kann.

Ein weiterer Vorteil ist, dass ein Kraftfahrzeug bereitgestellt werden kann, welches gewährleisten kann, dass behördlich geforderte Diagnosehäufigkeiten eingehalten werden können.

Ein weiterer Vorteil ist, dass ein Abgasverhalten nachhaltend überprüft werden kann.

Der Gegenstand eines weiteren nebengeordneten Anspruches betrifft dabei ein Computerprogrammprodukt für eine erfindungsgemäße Vorrichtung, wobei die Vorrichtung nach irgendeinem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand eines weiteren nebengeordneten Anspruches betrifft dabei einen Datenträger aufweisend ein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen, Systeme und/oder Kraftfahrzeuge verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden. Entsprechende Verfahrensabschnitte können zu entsprechenden Vorrichtungseigenschaften führen und umgekehrt, so dass, sofern der Kontext dies nicht explizit ausschließt, ein Wechsel eines Verfahrensmerkmales in ein Vorrichtungsmerkmal ermöglicht wird und umgekehrt.

Nachfolgend werden weitere exemplarische Ausgestaltungen des erfindungsgemäßen Verfahrens erläutert.

Entsprechend einer ersten exemplarischen Ausgestaltung weist das Verfahren ferner auf: Monitoren einer weiteren On-Board-Diagnosefunktion des Kraftfahrzeuges, wobei die weitere On-Board-Diagnosefunktion relevant für das Abgasverhalten des Kraftfahrzeuges ist. Vorhalten eines weiteren Diagnosezählers für die weitere On-Board-Diagnosefunktion des Kraftfahrzeuges. Bilden eines weiteren Diagnosehäufigkeitsistwertes, mittels einer geeigneten Kombination des weiteren Diagnosezählers mit dem Fahrtenzähler. Bilden einer weiteren Differenz des Diagnosehäufigkeitssollwertes von dem Diagnosehäufigkeitsistwert. Bilden einer Differenz des Diagnosehäufigkeitssollwertes von dem weiteren Diagnosehäufigkeitsistwert. Und falls die gebildete Differenz des Diagnosehäufigkeitssollwertes von dem weiteren Diagnosehäufigkeitsistwert eine weitere Differenzschwelle unterschreitet, weist die Auswahl des Steuerungsverfahrens aus der Steuerungsverfahrensgruppe ferner auf, dass dasjenige Steuerungsverfahren ausgewählt wird, welches zusätzlich dazu geeignet ist, eine aktuell laufende On-Board-Diagnose der weiteren On-Board-Diagnosefunktion erfolgreich abzuschließen, und eine nicht laufende On-Board-Diagnose der weiteren On-Board-Diagnosefunktion erfolgreich einzuleiten und abzuschließen. Und das Verfahren weist dabei ferner, nach Abschluss der On-Board Diagnose der weiteren On-Board-Diagnosefunktion, ein Inkrementieren des Diagnosezählers der weiteren On-Board-Diagnosefunktion auf.

Diese Ausgestaltung weist den Vorteil auf, dass ein entsprechendes Steuerungsverfahren für mehr als eine On-Board-Diagnosefunktion bereitgestellt werden kann.

Entsprechend einer weiteren exemplarischen Ausgestaltung weist das Verfahren ferner ein Monitoren einer aktuellen Fahrsituation des Kraftfahrzeuges auf. Dabei erfolgt das Auswählen des Steuerungsverfahrens aus der Steuerungsverfahrensgruppe, basierend auf der aktuellen Fahrsituation. Und ferner erfolgt dabei das Auswählen des Steuerungsverfahrens aus der Steuerungsverfahrensgruppe lediglich dann, falls das Monitoren der aktuellen Fahrsituation ergibt, dass die aktuelle Fahrsituation dazu geeignet ist, eine aktuell laufende On-Board-Diagnose der On-Board-Diagnosefunktion erfolgreich abzuschließen und eine nicht laufende On-Board-Diagnose der On-Board-Diagnosefunktion erfolgreich einzuleiten und abzuschließen.

Diese Ausgestaltung weist den Vorteil auf, dass die Auswahl eines Steuerungsverfahren zum Diagnosedurchlauf zusätzlich zu einer Notwendigkeitsprüfung, eine Sinnhaftigkeitsprüfung durchläuft. Dadurch können Diagnosen sinnvoller gestartet werden beziehungsweise Steuerungsverfahren können sinnvoller ausgewählt werden, um einen vollständigen Diagnosedurchlauf einer laufenden und/oder zu startenden Diagnose zu ermöglichen.

Entsprechend einer weiteren exemplarischen Ausgestaltung weist das Verfahren ferner auf, dass falls eine aktuell laufende On-Board-Diagnose der On-Board-Diagnosefunktion vorhanden ist, das Auswählen des Steuerungsverfahrens aus der Steuerungsverfahrensgruppe basierend auf einem Diagnosedurchlaufstatus der aktuell laufenden On-Board-Diagnose der On-Board-Diagnosefunktion erfolgt.

Diese Ausgestaltung weist den Vorteil auf, dass das auszuwählende Steuerungsverfahren eine aktuell bereits laufende Diagnose berücksichtigt.

Entsprechend einer weiteren exemplarischen Ausgestaltung weist das Verfahren ferner auf, dass das Bilden des Diagnosehäufigkeitsistwertes, eine Division des Diagnosezählers durch den Fahrtenzähler aufweist. Und falls ein weiterer Diagnosehäufigkeitsistwert vorhanden ist, weist das Bilden des weiteren Diagnosehäufigkeitsistwertes, eine Division des weiteren Diagnosezählers durch den Fahrtenzähler auf.

Diese Ausgestaltung weist den Vorteil auf, dass das Verfahren auch für ein Diagnosehäufigkeits-Soll-Verhältnis durchführbar ist.

Entsprechend einer weiteren exemplarischen Ausgestaltung weist das Verfahren ferner auf, dass die entsprechende On-Board Diagnose der On-Board-Diagnosefunktion beziehungsweise der weiteren On-Board-Diagnosefunktion eine Diagnose einer Funktionsfähigkeit einer abgasrelevanten Vorrichtung des Kraftfahrzeuges aufweist.

Diese Ausgestaltung weist den Vorteil auf, dass ein ordnungsgemäßes Funktionieren einer abgasrelevanten Vorrichtung überwacht werden kann.

Entsprechend einer weiteren exemplarischen Ausgestaltung weist das Verfahren ferner auf, dass die Steuerungsverfahrensgruppe aufweist: Ein Schubsteuerungsverfahren, zur Anforderung einer Schubabschaltung und/oder Schubeinschaltung einer Antriebsvorrichtung und/oder einer weiteren Antriebsvorrichtung des Kraftfahrzeuges. Und/oder ein Drehmomentsteuerungsverfahren, zum Bereitstellen eines für die On-Board-Diagnose benötigten Drehmomentenbereiches der Antriebsvorrichtung und/oder der weiteren Antriebsvorrichtung des Kraftfahrzeuges. Und/oder ein Geschwindigkeitssteuerungsverfahren, zum Limitieren eines für die On-Board-Diagnose benötigten Geschwindigkeitsbereiches des Kraftfahrzeuges, in welchem die Antriebsvorrichtung und/oder die weitere Antriebsvorrichtung des Kraftfahrzeuges eine entsprechende Leistung bereitstellen darf. Und/oder ein Lastpunktverschiebungsverfahren, zum Verschieben eines Lastpunktes der Antriebsvorrichtung und/oder der weiteren Antriebsvorrichtung des Kraftfahrzeuges. Und/oder ein Antriebsschaltverfahren, zum Verhindern eines Ausschaltens und/oder Anfordern eines Anschaltens der Antriebsvorrichtung und/oder der weiteren Antriebsvorrichtung des Kraftfahrzeuges.

Die Zuordnung der Methode soll über geeignete Applikationsparameter konfigurierbar sein.

Diese Ausgestaltung weist den Vorteil auf, dass diverse Steuerungsverfahren genutzt werden können, um die geforderte Diagnosehäufigkeit zu gewährleisten.

Ein weiterer Vorteil ist, dass je nach Art der On-Board-Diagnosefunktion ein entsprechendes Steuerungsverfahren ausgewählt werden kann, um die geforderte Diagnosehäufigkeit zu gewährleisten.

Beispielsweise benötigt die PCV Diagnose zur Detektion einer Leckage in der Verschlauchung der Kurbelgehäuseentlüftung einen verbrennungsmotorischen Betriebspunkt mit einer sehr niedrigen Last, damit die Leckage im Verhältnis zum gesamten Luftmassenstrom nicht zu klein wird. Ein günstiges Verhältnis dieser beiden Luftmassenströme wird entweder im Leerlauf des Verbrennungsmotors, im befeuerten Schub, oder im unbefeurten Schub erreicht.

Entsprechend einer weiteren exemplarischen Ausgestaltung weist das Verfahren ferner auf, dass das Schubsteuerungsverfahren zur Anforderung einer Schubabschaltung, basierend auf einer Start-Stopp-Automatik des Kraftfahrzeuges und/oder einer Momentenkoordination der Antriebsvorrichtung mit der weiteren Antriebsvorrichtung des Kraftfahrzeuges erfolgt.

Diese Ausgestaltung weist den Vorteil auf, dass ein Schubsteuerungsverfahren genutzt werden kann, um die geforderte Diagnosehäufigkeit auch bei ungünstigen Fahrsituationen gewährleisten zu können.

Diese Ausgestaltung weist ferner den Vorteil auf, dass eine PCV Diagnose zur Detektion einer Leckage in der Verschlauchung der Kurbelgehäuseentlüftung trotz einer aktuell eigentlich ungünstigen Fahrsituation durchgeführt werden kann.

Nachfolgend einige zugehörige Fahrsituationsbeispiele: Beispiel 1: Aktuelle Fahrsituation mit Geschwindigkeiten > 50km/h und Batterieladezustand SOC > 5%:
Anforderung einer Schubabschaltung über die Start-Stopp-Automatik und die Momentenkoordination.
Verhalten ohne Anforderung ist: Ablegen des Verbrennungsmotors
Beispiels 2: Aktuelle Fahrsituation mit Geschwindigkeiten > 50km/h und SOC < 5%
Anforderung befeuerter Schub über die Start-Stopp-Automatik und Limitierung des Lademoments über die Momentenkoordination
Verhalten ohne Anforderung ist: Befeuerter Schub mit hohem Lademoment, somit kein Diagnosedurchlauf möglich.
Beispiel 3: Aktuelle Fahrsituation Stop&Go Betrieb
Anforderung Motorstart und Limitierung des Lademoments im verbrennungsmotorischen Leerlauf.

Verhalten ohne Anforderung ist: Verbrennungsmotor ist aus, oder lädt bei niedrigen SOCs mit hohem Lademoment.

Beispielsweise misst die Katalysator-Diagnose im verbrennungsmotorischen Betrieb die Sauerstoffspeicherfähigkeit des motornahen Katalysators. Dies kann nur innerhalb eines bestimmten Lastfensters und bei ausreichend hoher Kattemperatur erfolgen.

Entsprechend einer weiteren exemplarischen Ausgestaltung weist das Verfahren ferner auf, dass das Drehmomentsteuerungsverfahren, zum Bereitstellen der für die On-Board-Diagnose benötigten Drehmomentenbereiches der Antriebsvorrichtung und/oder der weiteren Antriebsvorrichtung des Kraftfahrzeuges basierend auf einer motorischen und/oder generatorischen Drehmomentkompensation erfolgt.

Diese Ausgestaltung weist den Vorteil auf, dass ein Drehmomentsteuerungsverfahren genutzt werden kann, um die geforderte Diagnosehäufigkeit auch bei ungünstigen Fahrsituationen gewährleisten zu können.

Diese Ausgestaltung weist ferner den Vorteil auf, dass eine Katalysator-Diagnose im verbrennungsmotorischen Betrieb trotz einer aktuell eigentlich ungünstigen Fahrsituation durchgeführt werden kann.

Nachfolgend ein zugehöriges Fahrsituationsbeispiel:
Aktuelle Fahrsituation mit konstanter Geschwindigkeit > 50km/h und Fahrzeug befindet sich im Charge Sustaining Betrieb.

Anforderung eines Wunschmomentenfensters für den Verbrennungsmotor. Es wird für die Dauer der Diagnose ein minimales und ein maximales Moment vorgegeben in dem der Verbrennungsmotor betrieben werden darf. Kompensation durch motorisches oder generatorisches Moment der E-Maschine.

Verhalten ohne Anforderung: Diagnose kann durch Lastschwankungen abgebrochen werden.

Entsprechend einer weiteren exemplarischen Ausgestaltung weist das Verfahren ferner auf, dass das Geschwindigkeitssteuerungsverfahren, zum Limitieren eines für die On-Board-Diagnose benötigten Geschwindigkeitsbereiches des Kraftfahrzeuges, in welchem die Antriebsvorrichtung und/oder die weitere Antriebsvorrichtung des Kraftfahrzeuges eine entsprechende Leistung bereitstellen darf, basierend auf einer Begrenzung einer maximalen Fahrgeschwindigkeit eines Elektroantriebes als Antriebsvorrichtung oder weitere Antriebsvorrichtung und/oder auf einer Begrenzung einer maximalen Fahrgeschwindigkeit eines Verbrennungsantriebes als Antriebsvorrichtung oder weitere Antriebsvorrichtung erfolgt.

Diese Ausgestaltung weist den Vorteil auf, dass ein Geschwindigkeitssteuerungsverfahren genutzt werden kann, um die geforderte Diagnosehäufigkeit auch bei ungünstigen Fahrsituationen gewährleisten zu können.

Nachfolgend ein zugehöriges Fahrsituationsbeispiel:
Aktuelle Fahrsituation mit konstanter Geschwindigkeit > 50km/h und Fahrzeug befindet sich im Charge Depleting Betrieb.

Anforderung einer temporär reduzierten maximalen E-Fahrgeschwindigkeit, damit die Diagnose im Verbrennungsmotorischen Betrieb durchlaufen kann.

Verhalten ohne Anforderung: Verbrennungsmotor ist aus und Diagnose kann nicht durchgeführt werden.

Beispielsweise prüft die TEV Diagnose das Tankentlüftungsventil und die damit verbundenen Leitungen auf Undichtigkeit beziehungsweise ein festsitzendes Ventil. Die erste Einleitstelle arbeitet durch den Unterdruck im saugmotorischen Betrieb des Verbrennungsmotors. Die Zweite Einleitstelle baut nur im aufgeladenen Betrieb einen Unterdruck auf und kann auch nur in diesen hohen Betriebspunkten diagnostiziert werden.

Entsprechend einer weiteren exemplarischen Ausgestaltung weist das Verfahren ferner auf, dass das Lastpunktverschiebungsverfahren zum Verschieben des Lastpunktes der Antriebsvorrichtung und/oder der weiteren Antriebsvorrichtung des Kraftfahrzeuges, basierend auf einer Lastpunktanhebung oder einer Lastpunktabsenkung eines Verbrennungsantriebes als Antriebsvorrichtung oder weitere Antriebsvorrichtung erfolgt.

Diese Ausgestaltung weist den Vorteil auf, dass ein Lastpunktverschiebungsverfahren genutzt werden kann, um die geforderte Diagnosehäufigkeit auch bei ungünstigen Fahrsituationen gewährleisten zu können.

Nachfolgend ein zugehöriges Fahrsituationsbeispiel:
Aktuelle Fahrsituation Beschleunigung kurz vor dem Erreichen der Lastschwelle, bei der eine Freigabe der Diagnose stattfindet.

Anforderung einer Lastpunktanhebung, somit ein Laden der Batterie, um die verbrennungsmotorische Last für einige Sekunden anzuheben.

Verhalten ohne Anforderung: Der Betriebspunkt des Verbrennungsmotors ist zu niedrig um die Diagnose durchzuführen.

Entsprechend einer weiteren exemplarischen Ausgestaltung weist das Verfahren ferner auf, dass die Antriebsvorrichtung des Kraftfahrzeuges einen Verbrennungsmotor aufweist. Ferner, dass die weitere Antriebsvorrichtung des Kraftfahrzeuges einen Elektromotor aufweist. Und das Verfahren weist ferner auf, dass die Antriebsvorrichtung und/oder die weitere Antriebsvorrichtung dazu eingerichtet ist, eine entsprechende Antriebsleistung für eine Fahrt des Kraftfahrzeuges bereitzustellen.

Diese Ausgestaltung weist den Vorteil auf, dass das Verfahren für ein Hybridkraftfahrzeug einsetzbar ist.

Entsprechend einer weiteren exemplarischen Ausgestaltung weist das Verfahren ferner auf, dass das ausgewählte Steuerungsverfahren durch eine entsprechende Aktion des Nutzers des Kraftfahrzeuges abbrechbar ist, wodurch das Zurücksetzen der Motoransteuerung auf die ursprüngliche Motoransteuerung, gemäß dem Zustand vor der Auswahl des Steuerungsverfahrens eingeleitet wird.

Diese Ausgestaltung weist den Vorteil auf, dass der Kraftfahrzeugnutzer die letztendliche Kontrolle über das Antriebsverhalten seines Kraftfahrzeuges behalten kann.

Entsprechend einer weiteren exemplarischen Ausgestaltung weist das Verfahren ferner auf, dass beim Auswählen des Steuerungsverfahrens aus der Steuerungsverfahrensgruppe eine Berücksichtigung einer Wahrnehmbarkeit des entsprechenden Steuerungsverfahrens durch den Nutzer des Kraftfahrzeuges erfolgt.

Diese Ausgestaltung weist den Vorteil auf, dass je nach Situation ein entsprechendes Steuerungsverfahren ausgewählt werden kann, welches den Fahrzeugnutzer am wenigsten in seinen Fahrgewohnheiten einschränkt, um die geforderte Diagnosehäufigkeit zu gewährleisten.

Ein weiterer Vorteil ist, dass je nach Situation ein entsprechendes bestmögliches Steuerungsverfahren ausgewählt werden kann, welches dabei ein Optimum erfüllt, zwischen einem Wunsch, einen Fahrzeugnutzer so wenig wie möglich in seinen Fahrgewohnheiten einzuschränken, und der Erfordernis eine entsprechende Diagnosehäufigkeit zu gewährleisten.

Die Erfindung erlaubt es somit, eine geforderte Diagnosehäufigkeit für eine Diagnose einer in einem Kraftfahrzeug vorhandenen abgasrelevanten Vorrichtung zu gewährleisten. Ferner erlaubt es die Erfindung eine geforderte Diagnosehäufigkeit für eine entsprechende Diagnose einer jeden abgasrelevanten Vorrichtung des Kraftfahrzeuges zu gewährleisten. Dabei kann ein je nach Anforderung optimales Steuerungsverfahren für eine Antriebsvorrichtung des Kraftfahrzeuges ausgewählt werden, um zu gewährleisten, dass eine entsprechende Diagnose einer entsprechenden abgasrelevanten Vorrichtung erfolgreich durchgeführt, also abgeschlossen werden kann, um eine geforderte Diagnosehäufigkeit gewährleisten zu können beziehungsweise sicherzustellen, dass die geforderte Diagnosehäufigkeit im Mittel eingehalten werden kann, bezüglich vorgegebener erlaubter Abweichungswerte. Je nachdem wie die Differenzschwelle festgelegt wird, kann gewährleistet werden, dass eine geforderte Diagnosehäufigkeit nicht unterschritten wird.

Wenn die aktuelle Situation somit einen Diagnoseeingriff notwendig und sinnvoll erscheinen Lässt, kann zielgerichtet die richtige Methode zur Unterstützung des Diagnosedurchlaufs ausgewählt werden.

Die Methode zur Unterstützung des Diagnosedurchlaufs kann dabei auf Basis der aktuellen Fahrsituation und der zu unterstützenden Diagnose ausgewählt werden.

Somit kann ein Diagnosemanager entscheiden, ob ein Eingriff notwendig und auch sinnvoll ist und eine der aktuell benötigten Diagnose und der aktuellen Fahrsituation des Kraftfahrzeuges entsprechende Strategie auswählen. Diese kann zunächst aufgeteilt werden in eine Strategie mittels einer Start-Stopp-Automatik, auch SSA genannt, des entsprechenden Antriebes, einer Momentenkoordination, also einer Batterieladezustandsregelung, auch SOC-Regelung genannt oder einer Elektromotorfahrstrategie, auch E-Fahrstrategie genannt. Die Strategie mittels SSA kann dabei beispielsweise eine Schubabschaltungsstrategie, eine Abschaltverhinderungsstrategie oder Einschaltaufforderungsstrategie als Steuerungsverfahren aufweisen. Die SOC-Strategie kann beispielsweise eine Befeuerte-Schub-Strategie und eine Wunschmomentenfenster-Strategie als Steuerungsverfahren aufweisen. Die E-Fahrstrategie kann beispielsweise eine E-Fahrausprägungsstrategie und eine maximale E-Fahrgeschwindigkeitsstrategie als Steuerungsverfahren aufweisen.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung eines vorgeschlagenen Verfahrens gemäß einer weiteren beispielhaften Ausgestaltung der Erfindung;
Fig. 4 eine schematische Darstellung einer vorgeschlagenen Vorrichtung gemäß einer weiteren beispielhaften Ausgestaltung der Erfindung; und
Fig. 5 eine schematische Darstellung eines vorgeschlagenen Kraftfahrzeuges gemäß einer weiteren beispielhaften Ausgestaltung der Erfindung.

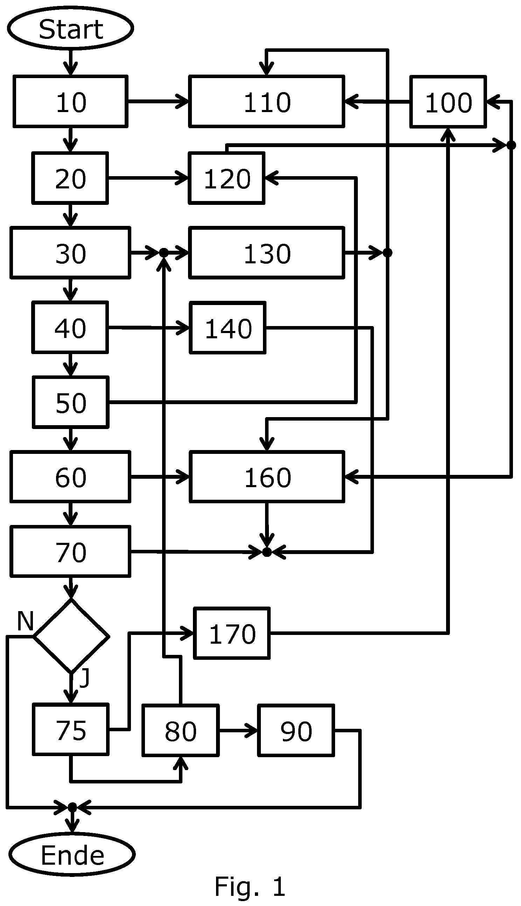

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Verfahrens für ein Kraftfahrzeug, zur Qualitätssicherung eines Abgasverhaltens in einem Kraftfahrzeug 100, vorzugsweise in einem Hybrid Kraftfahrzeug, insbesondere in einem Plug-In-Hybrid Kraftfahrzeug. Das Verfahren weist auf: Monitoren 10 einer On-Board-Diagnosefunktion 110 des Kraftfahrzeuges 100, wobei die On-Board-Diagnosefunktion 110 relevant für das Abgasverhalten des Kraftfahrzeuges ist. Vorhalten 20 eines Fahrtenzählers 120, wobei der Fahrtenzähler 120 indikativ ist, für eine Anzahl an Fahrten des Kraftfahrzeuges 100. Vorhalten 30 eines Diagnosezählers 130 für die von dem Monitoring 10 betroffene On-Board-Diagnosefunktion 110 des Kraftfahrzeuges 100. Vorhalten 40 eines Diagnosehäufigkeitssollwertes 140. Inkrementieren 50 des Fahrtenzählers 120 nach Beginn eines Fahrzyklus des Kraftfahrzeuges 100 und einer vorbestimmten Fahrdauer des Kraftfahrzeuges 100. Bilden 60 eines Diagnosehäufigkeitsistwertes 160, mittels einer geeigneten Kombination des Diagnosezählers 130 mit dem Fahrtenzähler 120. Bilden 70 einer Differenz des Diagnosehäufigkeitssollwertes 140 von dem Diagnosehäufigkeitsistwert 160. Und falls die gebildete Differenz des Diagnosehäufigkeitssollwertes 140 von dem Diagnosehäufigkeitsistwert 160 eine Differenzschwelle unterschreitet, weist das Verfahren ferner auf: Auswählen 75 eines Steuerungsverfahrens 170 aus einer Steuerungsverfahrensgruppe, wobei jedes Steuerungsverfahren 170 der Steuerungsverfahrensgruppe indikativ für eine entsprechende Motoransteuerung eines Antriebsmotors des Kraftfahrzeuges 100 ist. Dabei ist das ausgewählte Steuerungsverfahren 170 dazu geeignet, eine aktuell laufende On-Board-Diagnose der On-Board-Diagnosefunktion 110 erfolgreich abzuschließen und eine nicht laufende On-Board-Diagnose der On-Board-Diagnosefunktion 110 erfolgreich einzuleiten und abzuschließen. Und nach Abschluss der On-Board Diagnose der On-Board-Diagnosefunktion 110 weist das Verfahren auf: Inkrementieren 80 des Diagnosezählers 130 der On-Board-Diagnosefunktion 110. Und zurücksetzen 90 der Motoransteuerung auf eine ursprüngliche Motoransteuerung, gemäß einem Zustand vor der Auswahl des Steuerungsverfahrens 170.

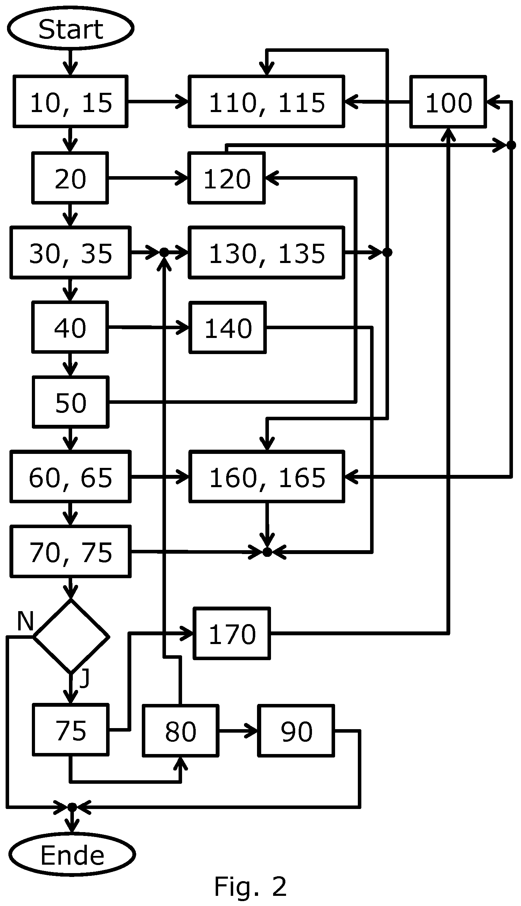

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung eines bezüglich der Fig. 1 weiterentwickelten Verfahrens. Das zuvor für Fig. 1 Gesagte, gilt daher auch für Fig. 2 fort.

Fig. 2 zeigt das Verfahren aus Fig. 1 bei dem ferner das Verfahren aufweist: Monitoren 15 einer weiteren On-Board-Diagnosefunktion 115 des Kraftfahrzeuges 100, wobei die weitere On-Board-Diagnosefunktion 115 relevant für das Abgasverhalten des Kraftfahrzeuges 100 ist. Vorhalten 35 eines weiteren Diagnosezählers 135 für die weitere On-Board-Diagnosefunktion 115 des Kraftfahrzeuges 100. Bilden 65 eines weiteren Diagnosehäufigkeitsistwertes 165, mittels einer geeigneten Kombination des weiteren Diagnosezählers 135 mit dem Fahrtenzähler 120. Bilden 75 einer weiteren Differenz des Diagnosehäufigkeitssollwertes 140 von dem weiteren Diagnosehäufigkeitsistwert 165. Und falls die gebildete weitere Differenz des Diagnosehäufigkeitssollwertes 140 von dem weiteren Diagnosehäufigkeitsistwert 165 eine weitere Differenzschwelle unterschreitet, weist das Verfahren ferner auf, dass die Auswahl 75 des Steuerungsverfahrens 170 aus der Steuerungsverfahrensgruppe aufweist, dass dasjenige Steuerungsverfahren ausgewählt wird, welches zusätzlich dazu geeignet ist, eine aktuell laufende On-Board-Diagnose der weiteren On-Board-Diagnosefunktion 115 erfolgreich abzuschließen beziehungsweise eine nicht laufende On-Board-Diagnose der weiteren On-Board-Diagnosefunktion 115 erfolgreich einzuleiten und abzuschließen. Und ferner weist das Verfahren, nach Abschluss der On-Board Diagnose der weiteren On-Board-Diagnosefunktion 115, ein Inkrementieren 85 des weiteren Diagnosezählers 135 der weiteren On-Board-Diagnosefunktion 115 auf.

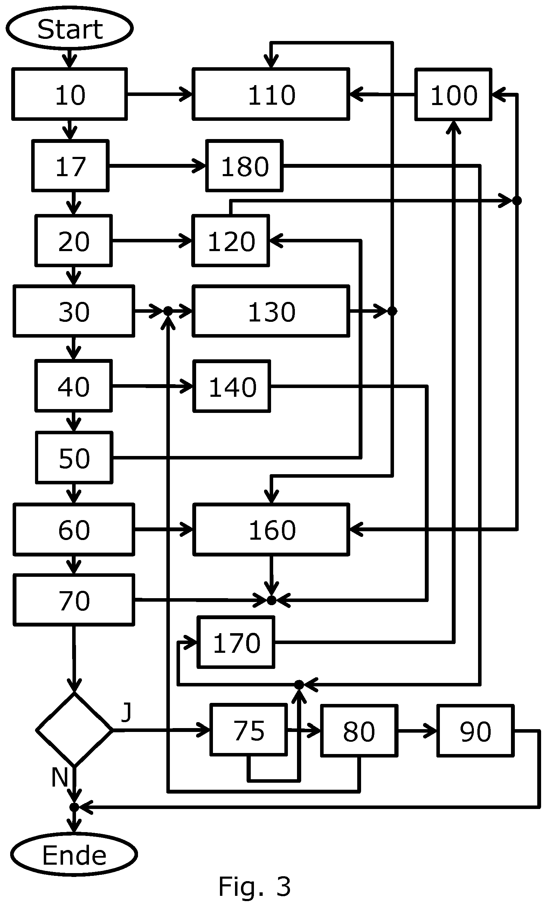

Fig. 3 zeigt eine schematische Darstellung eines vorgeschlagenen Verfahrens gemäß einer weiteren beispielhaften Ausgestaltung der Erfindung.

Dabei zeigt Fig. 3 eine schematische Darstellung eines bezüglich der Fig. 1 und Fig. 2 weiterentwickelten Verfahrens. Das zuvor für Fig. 1 und Fig. 2 Gesagte, gilt daher auch für Fig. 3 fort.

Fig. 3 zeigt das Verfahren aus Fig. 1 bei dem ferner das Verfahren aufweist: Monitoren 17 einer aktuellen Fahrsituation 180 des Kraftfahrzeuges 100. Dabei erfolgt das Auswählen 75 des Steuerungsverfahrens 170 aus der Steuerungsverfahrensgruppe basierend auf der aktuellen Fahrsituation 180. Und dabei erfolgt das Auswählen 75 des Steuerungsverfahrens 170 aus der Steuerungsverfahrensgruppe lediglich dann, falls das Monitoren 17 der aktuellen Fahrsituation 180 ergibt, dass die aktuelle Fahrsituation 180 dazu geeignet ist, eine aktuell laufende On-Board-Diagnose der On-Board-Diagnosefunktion 110 erfolgreich abzuschließen und eine nicht laufende On-Board-Diagnose der On-Board-Diagnosefunktion 110 erfolgreich einzuleiten und abzuschließen.

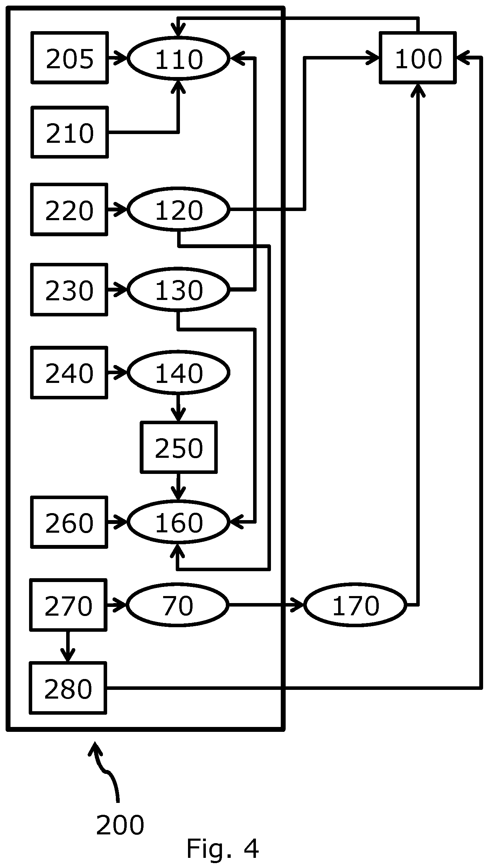

Fig. 4 zeigt eine schematische Darstellung einer vorgeschlagenen Vorrichtung gemäß einer weiteren beispielhaften Ausgestaltung der Erfindung.

Dabei zeigt Fig. 4 eine schematische Darstellung einer vorgeschlagenen Vorrichtung 200 zur Qualitätssicherung eines Abgasverhaltens in einem Kraftfahrzeug 100, vorzugsweise in einem Hybrid Kraftfahrzeug, insbesondere in einem Plug-In-Hybrid Kraftfahrzeug. Die Vorrichtung weist auf: Eine On-Board-Diagnosevorrichtung 205, mit einer On-Board-Diagnosefunktion 110, für eine On-Board Diagnose einer Funktionsfähigkeit einer abgasrelevanten Vorrichtung des Kraftfahrzeuges 100. Eine Monitoring-Vorrichtung 210, zum Überwachen der On-Board-Diagnosefunktion 110 der On-Board-Diagnosevorrichtung 205 des Kraftfahrzeuges 100. Eine Vorrichtung 220 zum Vorhalten eines Fahrtenzählers 120, wobei der Fahrtenzähler 120 indikativ ist, für eine Anzahl an Fahrzyklen des Kraftfahrzeuges 100. Dabei ist die Vorrichtung 220 zum Vorhalten des Fahrtenzählers 120 dazu eingerichtet, ein Inkrementieren des Fahrtenzählers 120 zu ermöglichen. Ferner weist die Vorrichtung 200 zur Qualitätssicherung eines Abgasverhaltens in einem Kraftfahrzeug eine Vorrichtung 230 zum Vorhalten eines Diagnosezählers 130 auf, für die von dem Monitoring 10 betroffene On-Board-Diagnosefunktion 110 des Kraftfahrzeuges 100. Dabei ist die Vorrichtung 230 zum Vorhalten des Diagnosezählers 130 dazu eingerichtet, ein Inkrementieren des Diagnosezählers 130 der On-Board-Diagnosefunktion 110 zu ermöglichen. Ferner weist die Vorrichtung 200 zur Qualitätssicherung eines Abgasverhaltens in einem Kraftfahrzeug auf: Eine Vorrichtung 240 zum Vorhalten eines Diagnosehäufigkeitssollwertes 140. Eine Vorrichtung 260 zum Bilden eines Diagnosehäufigkeitsistwertes 160, mittels einer geeigneten Kombination des Diagnosezählers 130 mit dem Fahrtenzähler 120. Eine Vergleichsvorrichtung 250, zum Vergleichen des Diagnosehäufigkeitsistwertes 160 mit dem Diagnosehäufigkeitssollwert 140. Eine Auswahlvorrichtung 270, zum Auswählen 70 eines Steuerungsverfahrens 170 aus einer Steuerungsverfahrensgruppe, wobei jedes Steuerungsverfahren 170 der Steuerungsverfahrensgruppe indikativ für eine entsprechende Motoransteuerung eines Antriebsmotors des Kraftfahrzeuges 100 ist. Und dabei ist das ausgewählte Steuerungsverfahren 170 dazu geeignet, eine aktuell laufende On-Board-Diagnose der On-Board-Diagnosefunktion 110 erfolgreich abzuschließen und eine nicht laufende On-Board-Diagnose der On-Board-Diagnosefunktion 110 erfolgreich einzuleiten und abzuschließen. Und ferner weist die Vorrichtung 200 zur Qualitätssicherung eines Abgasverhaltens in einem Kraftfahrzeug eine Vorrichtung 280 zum Zurücksetzen der Motoransteuerung auf eine ursprüngliche Motoransteuerung auf, gemäß einem Zustand vor der Auswahl 70 des Steuerungsverfahrens 170. Und dabei ist die Vorrichtung 200 zur Qualitätssicherung eines Abgasverhaltens in einem Kraftfahrzeug dazu eingerichtet, irgendein erfindungsgemäßes Verfahren auszuführen.

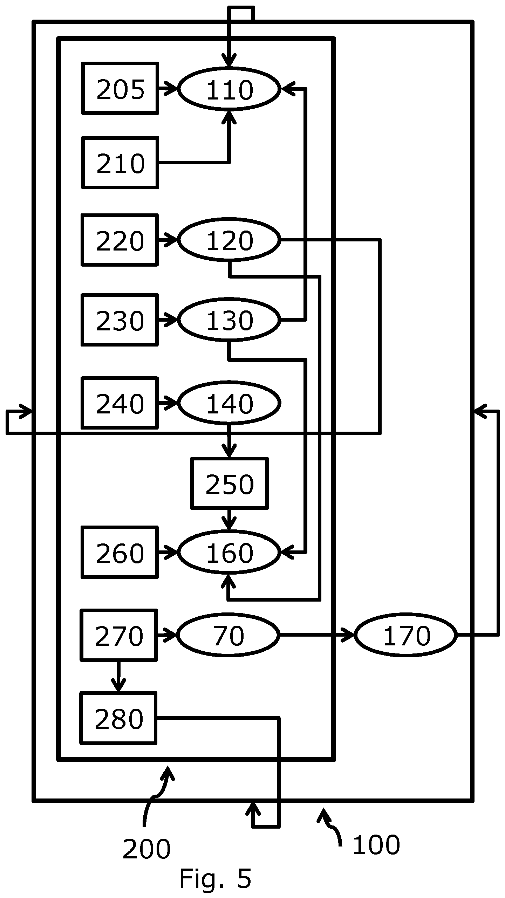

Fig. 5 zeigt eine schematische Darstellung eines vorgeschlagenen Kraftfahrzeuges gemäß einer weiteren beispielhaften Ausgestaltung der Erfindung.

Dabei zeigt Fig. 5 eine schematische Darstellung eines vorgeschlagenen Kraftfahrzeuges 100. Dabei weist das Kraftfahrzeug 100 eine erfindungsgemäße Vorrichtung 200 auf. Die Vorrichtung 200 ist dabei dazu eingerichtet, irgendein erfindungsgemäßes Verfahren auszuführen. In Fig. 5 weist das Kraftfahrzeug beispielhaft die Vorrichtung 200 aus Fig. 4 auf.

Die Erfindungsidee kann wie folgt zusammengefasst werden. Es werden ein Verfahren, eine diesbezügliche Vorrichtung und ein diesbezügliches Kraftfahrzeug bereitgestellt, wodurch es möglich werden kann, eine gewünschte Diagnosehäufigkeit einer Diagnose einer abgasrelevanten Vorrichtung einzuhalten. Solch eine einzuhaltende Diagnosehäufigkeit kann dabei von einer Behörde gefordert beziehungsweise festgelegt beziehungsweise bestimmt sein.

Ein Beispiel können dabei Anforderungen der US-Behörde sein, bei der für jede US-Fahrzeug-Zulassung in jedem einzelnen Jahr solche Diagnosehäufigkeiten stets eingehalten werden müssen.

Somit fordert die entsprechende US-Behörde viele On-Board Diagnosefunktionen im Fahrzeug, sogenannte OBD-Funktionen. Dies ist ebenso ein Bestandteil für Plug-In Hybride, sogenannte PHEVs.

OBD Diagnosen haben klar definierte Freigabebedingungen oder Abbruchbedingungen. Eine Diagnose läuft erfolgreich durch, wenn über eine Mindestzeit die geforderten Bedingungen vorliegen.

Für die meisten Diagnosen sind folgende Bedingungen relevant:
- verbrennungsmotorischer Betrieb
- Betriebspunkt Verbrennungsmotor
- befeuerter- oder unbefeuerter Schub des Verbrennungsmotors

Bei Hybridantrieben und insbesondere Plug-In Hybridantrieben kommt es jedoch häufig zu Einschränkungen dieser Hauptbedingungen. Durch elektrisches Fahren wird der verbrennungsmotorische Betrieb (VM-Betrieb) unterbunden oder nach kurzer Zeit abgebrochen. Das VM-Lastfenster wird durch Randbedingungen, wie SOC Regelung, Fahrerwunsch und dergleichen geändert und die Schubabschaltungsphasen entfallen meist durch das Ablegen des Verbrennungsmotors schon bei hohen Geschwindigkeiten.

Der Diagnosemanager greift genau hier ein und unterstützt den Diagnosemanager durch einen gezielten Eingriff in die Betriebsstrategie des Fahrzeuges. Der Eingriff ermöglicht dabei einen geringen Einfluss auf das vom Kunden wahrnehmbare Fahrzeugverhalten und erlaubt es dabei, keine relevante Mehrung der CO2-Emissionen zu verursachen. Ein Beispiel einer solchen Betriebsstrategie beziehungsweise eines Steuerungsverfahrens ist dabei das sogenannte Wunschmomentenfenster als ein Drehmomentsteuerungsverfahren: Befindet sich der Fahrerwunsch oberhalb oder unterhalb des Lastfensters der Diagnose, kommt es zu einem Abbruch der Diagnose, die dann meist wieder von starten muss.

Durch eine temporäre Momentenlimitierung des Verbrennungsmotors, kann diese verhindert werden. Die Differenz zwischen Fahrerwunschmoment und VM-Moment wird dann von einer Traktionsemaschine zur Verfügung gestellt.

### Bezugszeichenliste

- 10: Monitoren einer On-Board-Diagnosefunktion
- 15: Monitoren einer weiteren On-Board-Diagnosefunktion
- 17: Monitoren einer aktuellen Fahrsituation des Kraftfahrzeuges
- 20: Vorhalten eines Fahrtenzählers
- 30: Vorhalten eines Diagnosezählers
- 35: Vorhalten eines weiteren Diagnosezählers
- 40: Vorhalten eines Diagnosehäufigkeitssollwertes
- 50: Inkrementieren des Fahrtenzählers
- 60: Bilden eines Diagnosehäufigkeitsistwertes
- 65: Bilden eines weiteren Diagnosehäufigkeitsistwertes
- 70: Bilden einer Differenz des Diagnosehäufigkeitssollwertes von dem Diagnosehäufigkeitsistwert
- 75: Bilden einer weiteren Differenz des Diagnosehäufigkeitssollwertes von dem weiteren Diagnosehäufigkeitsistwert
- 75: Auswählen eines Steuerungsverfahrens
- 80: Inkrementieren des Diagnosezählers
- 90: Zurücksetzen der Motoransteuerung
- 100: Kraftfahrzeug
- 110: On-Board-Diagnosefunktion
- 115: Weitere On-Board-Diagnosefunktion
- 120: Fahrtenzähler
- 130: Diagnosezähler
- 135: Weiterer Diagnosezähler
- 140: Diagnosehäufigkeitssollwert
- 160: Diagnosehäufigkeitsistwert
- 165: Weiterer Diagnosehäufigkeitsistwert
- 170: Steuerungsverfahren
- 180: Aktuelle Fahrsituation
- 200: Vorrichtung zur Qualitätssicherung eines Abgasverhaltens
- 205: On-Board-Diagnosevorrichtung
- 210: Monitoring-Vorrichtung
- 220: Vorrichtung zum Vorhalten eines Fahrtenzählers
- 230: Vorrichtung zum Vorhalten eines Diagnosezählers
- 240: Vorrichtung zum Vorhalten eines Diagnosehäufigkeitssollwertes
- 250: Vergleichsvorrichtung
- 260: Vorrichtung zum Bilden eines Diagnosehäufigkeitsistwertes
- 270: Auswahlvorrichtung
- 280: Vorrichtung zum Zurücksetzen der Motoransteuerung

## Patentansprüche

1. Ein Verfahren zur Qualitätssicherung eines Abgasverhaltens in einem Kraftfahrzeug (100), vorzugsweise in einem Hybrid Kraftfahrzeug, insbesondere in einem Plug-In-Hybrid Kraftfahrzeug, das Verfahren aufweisend:
- Monitoren (10) einer On-Board-Diagnosefunktion (110) des Kraftfahrzeuges (100), wobei die On-Board-Diagnosefunktion (110) relevant für das Abgasverhalten des Kraftfahrzeuges ist,
- Vorhalten (20) eines Fahrtenzählers (120), wobei der Fahrtenzähler (120) indikativ ist, für eine Anzahl an Fahrten des Kraftfahrzeuges (100),
- Vorhalten (30) eines Diagnosezählers (130) für die von dem Monitoring (10) betroffene On-Board-Diagnosefunktion (110) des Kraftfahrzeuges (100),
- Vorhalten (40) eines Diagnosehäufigkeitssollwertes (140),
- Inkrementieren (50) des Fahrtenzählers (120) nach Beginn eines Fahrzyklus des Kraftfahrzeuges (100) und einer vorbestimmten Fahrdauer des Kraftfahrzeuges (100),
**dadurch gekennzeichnet, dass** das Verfahren ferner aufweist:
- Bilden (60) eines Diagnosehäufigkeitsistwertes (160), mittels einer geeigneten Kombination des Diagnosezählers (130) mit dem Fahrtenzähler (120),
- Bilden (70) einer Differenz des Diagnosehäufigkeitssollwertes (140) von dem Diagnosehäufigkeitsistwert (160),
- Falls die gebildete Differenz des Diagnosehäufigkeitssollwertes (140) von dem Diagnosehäufigkeitsistwert (160) eine Differenzschwelle unterschreitet:
- Auswählen (75) eines Steuerungsverfahrens (170) aus einer Steuerungsverfahrensgruppe, wobei jedes Steuerungsverfahren (170) der Steuerungsverfahrensgruppe indikativ für eine entsprechende Motoransteuerung einer Antriebsvorrichtung des Kraftfahrzeuges (100) ist, wobei das ausgewählte Steuerungsverfahren (170) dazu geeignet ist, eine aktuell laufende On-Board-Diagnose der On-Board-Diagnosefunktion (110) erfolgreich abzuschließen und eine nicht laufende On-Board-Diagnose der On-Board-Diagnosefunktion (110) erfolgreich einzuleiten und abzuschließen, und
nach Abschluss der On-Board Diagnose der On-Board-Diagnosefunktion (110):
- Inkrementieren (80) des Diagnosezählers (130) der On-Board-Diagnosefunktion (110), und
- Zurücksetzen (90) der Motoransteuerung auf eine ursprüngliche Motoransteuerung, gemäß einem Zustand vor der Auswahl des Steuerungsverfahrens (170) .

2. Das Verfahren gemäß Anspruch 1, das Verfahren ferner aufweisend:
- Monitoren (15) einer weiteren On-Board-Diagnosefunktion (115) des Kraftfahrzeuges (100), wobei die weitere On-Board-Diagnosefunktion (115) relevant für das Abgasverhalten des Kraftfahrzeuges (100) ist,
- Vorhalten (35) eines weiteren Diagnosezählers (135) für die weitere On-Board-Diagnosefunktion (115) des Kraftfahrzeuges (100),
- Bilden (65) eines weiteren Diagnosehäufigkeitsistwertes (165), mittels einer geeigneten Kombination des weiteren Diagnosezählers (135) mit dem Fahrtenzähler (120),
- Bilden (75) einer weiteren Differenz des Diagnosehäufigkeitssollwertes (140) von dem weiteren Diagnosehäufigkeitsistwert (165),
- Falls die gebildete weitere Differenz des Diagnosehäufigkeitssollwertes (140) von dem weiteren Diagnosehäufigkeitsistwert (165) eine weitere Differenzschwelle unterschreitet:
- die Auswahl (75) des Steuerungsverfahrens (170) aus der Steuerungsverfahrensgruppe aufweisend, dass dasjenige Steuerungsverfahren ausgewählt wird, welches zusätzlich dazu geeignet ist, eine aktuell laufende On-Board-Diagnose der weiteren On-Board-Diagnosefunktion (115) erfolgreich abzuschließen, und eine nicht laufende On-Board-Diagnose der weiteren On-Board-Diagnosefunktion (115) erfolgreich einzuleiten und abzuschließen, und
- Inkrementieren (85) des weiteren Diagnosezählers (135) der weiteren On-Board-Diagnosefunktion (115) nach Abschluss der On-Board Diagnose der weiteren On-Board-Diagnosefunktion (115).

3. Das Verfahren gemäß Anspruch 1 oder 2, das Verfahren ferner aufweisend:
- Monitoren (17) einer aktuellen Fahrsituation (180) des Kraftfahrzeuges (100), wobei das Auswählen (75) des Steuerungsverfahrens (170) aus der Steuerungsverfahrensgruppe basierend auf der aktuellen Fahrsituation (180) erfolgt, und dabei das Auswählen (75) des Steuerungsverfahrens (170) aus der Steuerungsverfahrensgruppe lediglich dann erfolgt, falls das Monitoren (17) der aktuellen Fahrsituation (180) ergibt, dass die aktuelle Fahrsituation (180) dazu geeignet ist, eine aktuell laufende On-Board-Diagnose der On-Board-Diagnosefunktion (110) erfolgreich abzuschließen und eine nicht laufende On-Board-Diagnose der On-Board-Diagnosefunktion (110) erfolgreich einzuleiten und abzuschließen.

4. Das Verfahren gemäß irgendeinem der vorhergehenden Ansprüche, wobei,
falls eine aktuell laufende On-Board-Diagnose der On-Board-Diagnosefunktion (110) vorhanden ist, das Auswählen (75) des Steuerungsverfahrens (170) aus der Steuerungsverfahrensgruppe basierend auf einem Diagnosedurchlaufstatus der aktuell laufenden On-Board-Diagnose der On-Board-Diagnosefunktion (110) erfolgt.

5. Das Verfahren gemäß irgendeinem der vorhergehenden Ansprüche, wobei
das Bilden (60) des Diagnosehäufigkeitsistwertes (160) eine Division des Diagnosezählers (130) durch den Fahrtenzähler (120) aufweist, und
falls ein weiterer Diagnosehäufigkeitsistwert (165) vorhanden ist, das Bilden (65) des weiteren Diagnosehäufigkeitsistwertes (165), eine Division des weiteren Diagnosezählers (135) durch den Fahrtenzähler (120) aufweist.

6. Das Verfahren gemäß irgendeinem der vorhergehenden AnSprüche, wobei
die entsprechende On-Board Diagnose der On-Board-Diagnosefunktion (110) beziehungsweise der weiteren On-Board-Diagnosefunktion (115) eine Diagnose einer Funktionsfähigkeit einer abgasrelevanten Vorrichtung des Kraftfahrzeuges (100) aufweist.

7. Das Verfahren gemäß irgendeinem der vorhergehenden Ansprüche, wobei
die Steuerungsverfahrensgruppe aufweist:
- Ein Schubsteuerungsverfahren, zur Anforderung einer Schubabschaltung und/oder Schubeinschaltung der Antriebsvorrichtung und/oder einer weiteren Antriebsvorrichtung des Kraftfahrzeuges (100), und/oder
- Ein Drehmomentsteuerungsverfahren, zum Bereitstellen eines für die On-Board-Diagnose benötigten Drehmomentenbereiches der Antriebsvorrichtung und/oder der weiteren Antriebsvorrichtung des Kraftfahrzeuges (100), und/oder
- Ein Geschwindigkeitssteuerungsverfahren, zum Limitieren eines für die On-Board-Diagnose benötigten Geschwindigkeitsbereiches des Kraftfahrzeuges (100), in welchem die Antriebsvorrichtung und/oder die weitere Antriebsvorrichtung des Kraftfahrzeuges (100) eine entsprechende Leistung bereitstellen darf, und/oder
- Ein Lastpunktverschiebungsverfahren, zum Verschieben eines Lastpunktes der Antriebsvorrichtung und/oder der weiteren Antriebsvorrichtung des Kraftfahrzeuges (100), und/oder
- Ein Antriebsschaltverfahren, zum Verhindern eines Ausschaltens und/oder Anfordern eines Anschaltens der Antriebsvorrichtung und/oder der weiteren Antriebsvorrichtung des Kraftfahrzeuges (100).

8. Das Verfahren gemäß Anspruch 7, wobei
das Schubsteuerungsverfahren zur Anforderung einer Schubabschaltung, basierend auf einer Start-Stopp-Automatik des Kraftfahrzeuges (100) und/oder einer Momentenkoordination der Antriebsvorrichtung mit der weiteren Antriebsvorrichtung des Kraftfahrzeuges (100) erfolgt.

9. Das Verfahren gemäß Anspruch 7 oder 8, wobei
das Drehmomentsteuerungsverfahren, zum Bereitstellen der für die On-Board-Diagnose benötigten Drehmomentenbereiches der Antriebsvorrichtung und/oder der weiteren Antriebsvorrichtung des Kraftfahrzeuges (100) basierend auf einer motorischen und/oder generatorischen Drehmomentkompensation erfolgt.

10. Das Verfahren gemäß irgendeinem der vorhergehenden Ansprüche 7 bis 9, wobei
das Geschwindigkeitssteuerungsverfahren, zum Limitieren eines für die On-Board-Diagnose benötigten Geschwindigkeitsbereiches des Kraftfahrzeuges (100), in welchem die Antriebsvorrichtung und/oder die weitere Antriebsvorrichtung des Kraftfahrzeuges (100) eine entsprechende Leistung bereitstellen darf, basierend auf einer Begrenzung einer maximalen Fahrgeschwindigkeit eines Elektroantriebes als Antriebsvorrichtung oder weitere Antriebsvorrichtung und/oder auf einer Begrenzung einer maximalen Fahrgeschwindigkeit eines Verbrennungsantriebes als Antriebsvorrichtung oder weitere Antriebsvorrichtung erfolgt.

11. Das Verfahren gemäß irgendeinem der vorhergehenden Ansprüche 7 bis 10, wobei
das Lastpunktverschiebungsverfahren zum Verschieben des Lastpunktes der Antriebsvorrichtung und/oder der weiteren Antriebsvorrichtung des Kraftfahrzeuges (100), basierend auf einer Lastpunktanhebung oder einer Lastpunktabsenkung eines Verbrennungsantriebes als Antriebsvorrichtung oder weitere Antriebsvorrichtung erfolgt.

12. Das Verfahren gemäß irgendeinem der vorhergehenden Ansprüche 7 bis 11, wobei
die Antriebsvorrichtung des Kraftfahrzeuges (100) einen Verbrennungsmotor aufweist,
die weitere Antriebsvorrichtung des Kraftfahrzeuges (100) einen Elektromotor aufweist, und
die Antriebsvorrichtung und/oder die weitere Antriebsvorrichtung dazu eingerichtet ist, eine entsprechende Antriebsleistung für eine Fahrt des Kraftfahrzeuges (100) bereitzustellen.

13. Das Verfahren gemäß irgendeinem der vorhergehenden Ansprüche, wobei
das ausgewählte Steuerungsverfahren (170) durch eine entsprechende Aktion des Nutzers des Kraftfahrzeuges abbrechbar ist, wodurch das Zurücksetzen der Motoransteuerung auf die ursprüngliche Motoransteuerung, gemäß dem Zustand vor der Auswahl des Steuerungsverfahrens (170) eingeleitet wird.

14. Das Verfahren gemäß irgendeinem der vorhergehenden Ansprüche, wobei
beim Auswählen des Steuerungsverfahrens (170) aus der Steuerungsverfahrensgruppe eine Berücksichtigung einer Wahrnehmbarkeit des entsprechenden Steuerungsverfahrens (170) durch den Nutzer des Kraftfahrzeuges erfolgt (100) .

15. Eine Vorrichtung (200) zur Qualitätssicherung eines Abgasverhaltens in einem Kraftfahrzeug (100), vorzugsweise in einem Hybrid Kraftfahrzeug, insbesondere in einem Plug-In-Hybrid Kraftfahrzeug, die Vorrichtung aufweisend:
- Eine On-Board-Diagnosevorrichtung (205), mit einer On-Board-Diagnosefunktion (110), für eine On-Board Diagnose einer Funktionsfähigkeit einer abgasrelevanten Vorrichtung des Kraftfahrzeuges (100),
- Eine Monitoring-Vorrichtung (210), zum Überwachen der On-Board-Diagnosefunktion (110) der On-Board-Diagnosevorrichtung (205) des Kraftfahrzeuges (100),
- Eine Vorrichtung (220) zum Vorhalten eines Fahrtenzählers (120), wobei der Fahrtenzähler (120) indikativ ist, für eine Anzahl an Fahrzyklen des Kraftfahrzeuges (100), wobei die Vorrichtung (220) zum Vorhalten des Fahrtenzählers (120) dazu eingerichtet ist, ein Inkrementieren des Fahrtenzählers (120) zu ermöglichen,
- Eine Vorrichtung (230) zum Vorhalten eines Diagnosezählers (130) für die von dem Monitoring (10) betroffene On-Board-Diagnosefunktion (110) des Kraftfahrzeuges (100), wobei die Vorrichtung (230) zum Vorhalten des Diagnosezählers (130) dazu eingerichtet ist, ein Inkrementieren des Diagnosezählers (130) der On-Board-Diagnosefunktion (110) zu ermöglichen,
- Eine Vorrichtung (240) zum Vorhalten eines Diagnosehäufigkeitssollwertes (140),
- Eine Vorrichtung (260) zum Bilden eines Diagnosehäufigkeitsistwertes (160), mittels einer geeigneten Kombination des Diagnosezählers (130) mit dem Fahrtenzähler (120),
- Eine Vergleichsvorrichtung (250), zum Vergleichen des Diagnosehäufigkeitsistwertes (160) mit dem Diagnosehäufigkeitssollwert (140),
- Eine Auswahlvorrichtung (270), zum Auswählen (70) eines Steuerungsverfahrens (170) aus einer Steuerungsverfahrensgruppe, wobei jedes Steuerungsverfahren (170) der Steuerungsverfahrensgruppe indikativ für eine entsprechende Motoransteuerung eines Antriebsmotors des Kraftfahrzeuges (100) ist, und wobei das ausgewählte Steuerungsverfahren (170) dazu geeignet ist, eine aktuell laufende On-Board-Diagnose der On-Board-Diagnosefunktion (110) erfolgreich abzuschließen und eine nicht laufende On-Board-Diagnose der On-Board-Diagnosefunktion (110) erfolgreich einzuleiten und abzuschließen, und
- Eine Vorrichtung (280) zum Zurücksetzen der Motoransteuerung auf eine ursprüngliche Motoransteuerung, gemäß einem Zustand vor der Auswahl (70) des Steuerungsverfahrens (170),
**dadurch gekennzeichnet, dass**
die Vorrichtung (200) zur Qualitätssicherung des Abgasverhaltens in dem Kraftfahrzeug (100) dazu eingerichtet ist, ein Verfahren gemäß irgendeinem der vorhergehenden Ansprüche auszuführen.

16. Ein Kraftfahrzeug (100), aufweisend eine Vorrichtung (200) gemäß Anspruch 15.

17. Ein Computerprogrammprodukt für eine Vorrichtung (200) gemäß Anspruch 15, welche nach einem Verfahren gemäß irgendeinem der Ansprüche 1 bis 14 betreibbar ist.

18. Ein Datenträger, aufweisend ein Computerprogrammprodukt gemäß Anspruch 17.

## Claims

1. Method for quality assurance for an exhaust gas behaviour in a motor vehicle (100), preferably in a hybrid motor vehicle, in particular in a plug-in hybrid motor vehicle, the method involving:
- monitoring (10) an onboard diagnosis function (110) of the motor vehicle (100), the onboard diagnosis function (110) being relevant to the exhaust gas behaviour of the motor vehicle,
- providing (20) a trip counter (120), the trip counter (120) being indicative of a number of trips by the motor vehicle (100),
- providing (30) a diagnosis counter (130) for the onboard diagnosis function (110) of the motor vehicle (100) that is affected by the monitoring (10),
- providing (40) a diagnosis frequency setpoint value (140),
- incrementing (50) the trip counter (120) after the beginning of a driving cycle of the motor vehicle (100) and a predetermined driving time of the motor vehicle (100),
**characterized in that** the method further involves:
- forming (60) a diagnosis frequency actual value (160), by means of a suitable combination of the diagnosis counter (130) with the trip counter (120),
- forming (70) a difference between the diagnosis frequency setpoint value (140) and the diagnosis frequency actual value (160),
- if the formed difference between the diagnosis frequency setpoint value (140) and the diagnosis frequency actual value (160) is below a difference threshold:
- selecting (75) a control method (170) from a control method group, each control method (170) of the control method group being indicative of an applicable motor actuation of a drive apparatus of the motor vehicle (100), wherein the selected control method (170) is suitable for successfully completing a currently running onboard diagnosis of the onboard diagnosis function (110) and successfully initiating and completing a non-running onboard diagnosis of the onboard diagnosis function (110), and
after completion of the onboard diagnosis of the onboard diagnosis function (110):
- incrementing (80) the diagnosis counter (130) of the onboard diagnosis function (110), and
- resetting (90) the motor actuation to an original motor actuation, according to a state before the selection of the control method (170) .

2. Method according to Claim 1, the method further involving:
- monitoring (15) a further onboard diagnosis function (115) of the motor vehicle (100), the further onboard diagnosis function (115) being relevant to the exhaust gas behaviour of the motor vehicle (100),
- providing (35) a further diagnosis counter (135) for the further onboard diagnosis function (115) of the motor vehicle (100),
- forming (65) a further diagnosis frequency actual value (165), by means of a suitable combination of the further diagnosis counter (135) with the trip counter (120),
- forming (75) a further difference between the diagnosis frequency setpoint value (140) and the further diagnosis frequency actual value (165),
- if the formed further difference between the diagnosis frequency setpoint value (140) and the further diagnosis frequency actual value (165) is below a further difference threshold:
- the selection (75) of the control method (170) from the control method group involving that control method being selected that is additionally suitable for successfully completing a currently running onboard diagnosis of the further onboard diagnosis function (115), and successfully initiating and completing a non-running onboard diagnosis of the further onboard diagnosis function (115), and
- incrementing (85) the further diagnosis counter (135) of the further onboard diagnosis function (115) after completion of the onboard diagnosis of the further onboard diagnosis function (115).

3. Method according to Claim 1 or 2, the method further involving:
- monitoring (17) a current driving situation (180) of the motor vehicle (100), wherein the selecting (75) of the control method (170) from the control method group is effected based on the current driving situation (180), and in this case the selecting (75) of the control method (170) from the control method group is effected only if the monitoring (17) of the current driving situation (180) reveals that the current driving situation (180) is suitable for successfully completing a currently running onboard diagnosis of the onboard diagnosis function (110) and successfully initiating and completing a non-running onboard diagnosis of the onboard diagnosis function (110).

4. Method according to any one of the preceding claims, wherein
if a currently running onboard diagnosis of the onboard diagnosis function (110) is present, the selecting (75) of the control method (170) from the control method group is effected based on a diagnosis run status of the currently running onboard diagnosis of the onboard diagnosis function (110).

5. Method according to any one of the preceding claims, wherein
the forming (60) of the diagnosis frequency actual value (160) involves a division of the diagnosis counter (130) by the trip counter (120), and,
if a further diagnosis frequency actual value (165) is present, the forming (65) of the further diagnosis frequency actual value (165) involves a division of the further diagnosis counter (135) by the trip counter (120).

6. Method according to any one of the preceding claims, wherein
the applicable onboard diagnosis of the onboard diagnosis function (110) or of the further onboard diagnosis function (115) involves a diagnosis of a functional capability of an exhaust-gas-relevant apparatus of the motor vehicle (100).

7. Method according to any one of the preceding claims, wherein
the control method group comprises:
- a propulsion control method, for requesting propulsion shutdown and/or propulsion startup of the drive apparatus and/or of a further drive apparatus of the motor vehicle (100), and/or
- a torque control method, for providing a torque range of the drive apparatus and/or of the further drive apparatus of the motor vehicle (100) that is required for the onboard diagnosis, and/or
- a speed control method, for limiting a speed range of the motor vehicle (100) that is required for the onboard diagnosis, in which speed range the drive apparatus and/or the further drive apparatus of the motor vehicle (100) can provide an applicable power, and/or
- a load point shifting method, for shifting a load point of the drive apparatus and/or of the further drive apparatus of the motor vehicle (100), and/or
- a drive switching method, for preventing switching-off and/or requesting switching-on of the drive apparatus and/or of the further drive apparatus of the motor vehicle (100).

8. Method according to Claim 7, wherein
the propulsion control method for requesting propulsion shutdown is effected based on an automatic start/stop control system of the motor vehicle (100) and/or on torque coordination of the drive apparatus with the further drive apparatus of the motor vehicle (100).

9. Method according to Claim 7 or 8, wherein
the torque control method, for providing the torque range of the drive apparatus and/or of the further drive apparatus of the motor vehicle (100) that is required for the onboard diagnosis, is effected based on torque compensation by motor and/or by generator.

10. Method according to any one of preceding Claims 7 to 9, wherein
the speed control method, for limiting a speed range of the motor vehicle (100) that is required for the onboard diagnosis, in which speed range the drive apparatus and/or the further drive apparatus of the motor vehicle (100) can provide an applicable power, is effected based on limiting of a maximum speed of travel of an electric drive as drive apparatus or further drive apparatus and/or on limiting of a maximum speed of travel of an internal combustion drive as drive apparatus or further drive apparatus.

11. Method according to any one of preceding Claims 7 to 10, wherein
the load point shifting method for shifting the load point of the drive apparatus and/or of the further drive apparatus of the motor vehicle (100) is effected based on load point raising or load point lowering of an internal combustion drive as drive apparatus or further drive apparatus.

12. Method according to any one of preceding Claims 7 to 11, wherein
the drive apparatus of the motor vehicle (100) has an internal combustion engine,
the further drive apparatus of the motor vehicle (100) has an electric motor, and
the drive apparatus and/or the further drive apparatus is set up to provide an applicable drive power for a trip by the motor vehicle (100).

13. Method according to any one of the preceding claims, wherein
the selected control method (170) is abortable by an applicable action by the user of the motor vehicle, as a result of which the resetting of the motor actuation to the original motor actuation is initiated, according to the state before the selection of the control method (170).

14. Method according to any one of the preceding claims, wherein
the selecting of the control method (170) from the control method group involves a perceptibility of the applicable control method (170) by the user of the motor vehicle (100) being taken into consideration.

15. Apparatus (200) for quality assurance for an exhaust gas behaviour in a motor vehicle (100), preferably in a hybrid motor vehicle, in particular in a plug-in hybrid motor vehicle, the apparatus having:
- an onboard diagnosis apparatus (205), having an onboard diagnosis function (110), for an onboard diagnosis of a functional capability of an exhaust-gas-relevant apparatus of the motor vehicle (100),
- a monitoring apparatus (210), for monitoring the onboard diagnosis function (110) of the onboard diagnosis apparatus (205) of the motor vehicle (100),
- an apparatus (220) for providing a trip counter (120), the trip counter (120) being indicative of a number of driving cycles of the motor vehicle (100), wherein the apparatus (220) for providing the trip counter (120) is set up to allow incrementing of the trip counter (120),
- an apparatus (230) for providing a diagnosis counter (130) for the onboard diagnosis function (110) of the motor vehicle (100) that is affected by the monitoring (10), wherein the apparatus (230) for providing the diagnosis counter (130) is set up to allow incrementing of the diagnosis counter (130) of the onboard diagnosis function (110),
- an apparatus (240) for providing a diagnosis frequency setpoint value (140),
- an apparatus (260) for forming a diagnosis frequency actual value (160), by means of a suitable combination of the diagnosis counter (130) with the trip counter (120),
- a comparison apparatus (250), for comparing the diagnosis frequency actual value (160) with the diagnosis frequency setpoint value (140),
- a selection apparatus (270), for selecting (70) a control method (170) from a control method group, each control method (170) of the control method group being indicative of an applicable motor actuation of a drive motor of the motor vehicle (100), and the selected control method (170) being suitable for successfully completing a currently running onboard diagnosis of the onboard diagnosis function (110) and successfully initiating and completing a non-running onboard diagnosis of the onboard diagnosis function (110), and
- an apparatus (280) for resetting the motor actuation to an original motor actuation, according to a state before the selection (70) of the control method (170),
**characterized in that**
the apparatus (200) for quality assurance for the exhaust gas behaviour in the motor vehicle (100) is set up to carry out a method according to any one of the preceding claims.

16. Motor vehicle (100), having an apparatus (200) according to Claim 15.

17. Computer program product for an apparatus (200) according to Claim 15 that is operable using a method according to any one of Claims 1 to 14.

18. Data storage medium, having a computer program product according to Claim 17.

## Revendications

1. Procédé pour l'assurance qualité d'un comportement des gaz d'échappement dans un véhicule automobile (100), de préférence dans véhicule automobile hybride, en particulier dans un véhicule automobile hybride rechargeable, le procédé présentant les étapes consistant à :
- surveiller (10) une fonction de diagnostic embarqué (110) du véhicule automobile (100), la fonction de diagnostic embarqué (110) étant pertinente pour le comportement des gaz d'échappement du véhicule automobile,
- prévoir (20) un compteur de déplacements (120), le compteur de déplacements (120) indiquant un nombre de déplacements du véhicule automobile (100),
- prévoir (30) un compteur de diagnostics (130) destiné à la fonction de diagnostic embarqué (110), impliquée dans la surveillance (10), du véhicule automobile (100),
- prévoir (40) une valeur théorique de fréquence de diagnostic (140),
- incrémenter (50) le compteur de déplacements (120) après le début d'un cycle de conduite du véhicule automobile (100) et après une durée de conduite prédéterminée du véhicule automobile (100),
**caractérisé en ce que** le procédé présente en outre les étapes consistant à :
- former (60) une valeur réelle de fréquence de diagnostic (160) au moyen d'une combinaison appropriée du compteur de diagnostics (130) et du compteur de déplacements (120),
- former (70) une différence entre la valeur théorique de fréquence de diagnostic (140) et la valeur réelle de fréquence de diagnostic (160),
- si la différence formée entre la valeur théorique de fréquence de diagnostic (140) et la valeur réelle de fréquence de diagnostic (160) est inférieure à un seuil de différence :
- sélectionner (75) un procédé de commande (170) parmi un groupe de procédés de commande, chaque procédé de commande (170) du groupe de procédés de commande indiquant un pilotage de moteur correspondant d'un dispositif d'entraînement du véhicule automobile (100), le procédé de commande (170) sélectionné étant adapté pour achever avec succès un diagnostic embarqué actuellement en cours de la fonction de diagnostic embarqué (110) et pour déclencher et achever avec succès un diagnostic embarqué non en cours de la fonction de diagnostic embarqué (110), et
à l'issue du diagnostic embarqué de la fonction de diagnostic embarqué (110) :
- incrémenter (80) le compteur de diagnostics (130) de la fonction de diagnostic embarqué (110), et
- réinitialiser (90) le pilotage de moteur sur un pilotage de moteur d'origine selon un état avant la sélection du procédé de commande (170).

2. Procédé selon la revendication 1, le procédé présentant en outre les étapes consistant à :
- surveiller (15) une autre fonction de diagnostic embarqué (115) du véhicule automobile (100), l'autre fonction de diagnostic embarqué (115) étant pertinente pour le comportement des gaz d'échappement du véhicule automobile (100),
- prévoir (35) un autre compteur de diagnostics (135) pour l'autre fonction de diagnostic embarqué (115) du véhicule automobile (100),
- former (65) une autre valeur théorique de fréquence de diagnostic (165) au moyen d'une combinaison appropriée de l'autre compteur de diagnostics (135) et du compteur de déplacements (120),
- former (75) une autre différence entre la valeur théorique de fréquence de diagnostic (140) et l'autre valeur réelle de fréquence de diagnostic (165),
- si l'autre différence formée entre la valeur théorique de fréquence de diagnostic (140) et l'autre valeur réelle de fréquence de diagnostic (165) est inférieure à un autre seuil de différence :
- la sélection (75) du procédé de commande (170) parmi le groupe de procédés de commande présente le fait que le procédé de commande est sélectionné qui est en outre adapté pour achever avec succès un diagnostic embarqué actuellement en cours de l'autre fonction de diagnostic embarqué (115) et pour déclencher et achever avec succès un diagnostic embarqué non en cours de l'autre fonction de diagnostic embarqué (115), et
- incrémenter (85) l'autre compteur de diagnostics (135) de l'autre fonction de diagnostic embarqué (115) à l'issue du diagnostic embarqué de l'autre fonction de diagnostic embarqué (115).

3. Procédé selon la revendication 1 ou 2, le procédé présentant en outre l'étape consistant à :
- surveiller (17) une situation de conduite actuelle (180) du véhicule automobile (100), la sélection (75) du procédé de commande (170) parmi le groupe de procédés de commande étant effectuée sur la base de la situation de conduite actuelle (180), et la sélection (75) du procédé de commande (170) parmi le groupe de procédés de commande n'étant alors effectuée que s'il résulte de la surveillance (17) de la situation de conduite actuelle (180) que la situation de conduite actuelle (180) est adaptée pour achever avec succès un diagnostic embarqué actuellement en cours de la fonction de diagnostic embarqué (110) et pour déclencher et achever avec succès un diagnostic embarqué non en cours de la fonction de diagnostic embarqué (110).

4. Procédé selon l'une quelconque des revendications précédentes, dans lequel, s'il existe un diagnostic embarqué actuellement en cours de la fonction de diagnostic embarqué (110), la sélection (75) du procédé de commande (170) parmi le groupe de procédés de commande est effectuée sur la base d'un statut de passage de diagnostic du diagnostic embarqué actuellement en cours de la fonction de diagnostic embarqué (110).

5. Procédé selon l'une quelconque des revendications précédentes, dans lequel
la formation (60) de la valeur réelle de fréquence de diagnostic (160) présente une division du compteur de diagnostics (130) par le compteur de déplacements (120), et
si une autre valeur réelle de fréquence de diagnostic (165) existe, la formation (65) de l'autre valeur réelle de fréquence de diagnostic (165) présente une division de l'autre compteur de diagnostics (135) par le compteur de déplacements (120).

6. Procédé selon l'une quelconque des revendications précédentes, dans lequel le diagnostic embarqué correspondant de la fonction de diagnostic embarqué (110) ou de l'autre fonction de diagnostic embarqué (115) présente un diagnostic d'une capacité de fonctionnement d'un dispositif affectant les gaz d'échappement du véhicule automobile (100).

7. Procédé selon l'une quelconque des revendications précédentes, le groupe de procédés de commande présentant :
- un procédé de commande de poussée pour demander une désactivation de poussée et/ou une activation de poussée du dispositif d'entraînement et/ou d'un autre dispositif d'entraînement du véhicule automobile (100), et/ou
- un procédé de commande de couple pour fournir une plage de couple, nécessaire au diagnostic embarqué, du dispositif d'entraînement et/ou de l'autre dispositif d'entraînement du véhicule automobile (100), et/ou
- un procédé de commande de vitesse pour limiter une plage de vitesse, nécessaire au diagnostic embarqué, du véhicule automobile (100) dans laquelle le dispositif d'entraînement et/ou l'autre dispositif d'entraînement du véhicule automobile (100) est/sont autorisé(s) à fournir une puissance correspondante, et/ou
- un procédé de déplacement de point de charge pour déplacer un point de charge du dispositif d'entraînement et/ou de l'autre dispositif d'entraînement du véhicule automobile (100), et/ou
- un procédé d'activation d'entraînement pour empêcher une désactivation et/ou pour demander une activation du dispositif d'entraînement et/ou de l'autre dispositif d'entraînement du véhicule automobile (100).

8. Procédé selon la revendication 7, dans lequel le procédé de commande de poussée pour demander une désactivation de poussée est effectué sur la base d'un système marche/arrêt automatique du véhicule automobile (100) et/ou d'une coordination des moments du dispositif d'entraînement avec l'autre dispositif d'entraînement du véhicule automobile (100).

9. Procédé selon la revendication 7 ou 8, dans lequel le procédé de commande de couple pour fournir la plage de couple nécessaire au diagnostic embarqué du dispositif d'entraînement et/ou de l'autre dispositif d'entraînement du véhicule automobile (100) est effectué sur la base d'une compensation de couple par un moteur et/ou par un générateur.

10. Procédé selon l'une quelconque des revendications précédentes 7 à 9, dans lequel le procédé de commande de vitesse, pour limiter une plage de vitesse nécessaire au diagnostic embarqué du véhicule automobile (100), dans laquelle le dispositif d'entraînement et/ou l'autre dispositif d'entraînement du véhicule automobile (100) est/sont autorisé(s) à fournir une puissance correspondante, est effectué sur la base d'une limitation d'une vitesse de conduite maximale d'un entraînement électrique en tant que dispositif d'entraînement ou autre dispositif d'entraînement et/ou d'une limitation d'une vitesse de conduite maximale d'un entraînement à combustion en tant que dispositif d'entraînement ou autre dispositif d'entraînement.

11. Procédé selon l'une quelconque des revendications précédentes 7 à 10, dans lequel le procédé de déplacement de point de charge pour déplacer le point de charge du dispositif d'entraînement et/ou de l'autre dispositif d'entraînement du véhicule automobile (100) est effectué sur la base d'une augmentation de point de charge ou d'une diminution de point de charge d'un entraînement à combustion en tant que dispositif d'entraînement ou autre dispositif d'entraînement.

12. Procédé selon l'une quelconque des revendications précédentes 7 à 11, dans lequel
le dispositif d'entraînement du véhicule automobile (100) présente un moteur à combustion interne,
l'autre dispositif d'entraînement du véhicule automobile (100) présente un moteur électrique, et
le dispositif d'entraînement et/ou l'autre dispositif d'entraînement est/sont aménagé(s) pour fournir une puissance d'entraînement correspondante pour un déplacement du véhicule automobile (100).

13. Procédé selon l'une quelconque des revendications précédentes, dans lequel le procédé de commande (170) sélectionné peut être interrompu par une action correspondante de l'utilisateur du véhicule automobile de manière à déclencher la réinitialisation du pilotage de moteur sur le pilotage de moteur d'origine selon l'état avant la sélection du procédé de commande (170).

14. Procédé selon l'une quelconque des revendications précédentes, dans lequel lors de la sélection du procédé de commande (170) parmi le groupe de procédés de commande, une prise en compte d'une perceptibilité du procédé de commande correspondant (170) par l'utilisateur du véhicule automobile (100) est effectuée.

15. Dispositif (200) pour l'assurance qualité d'un comportement des gaz d'échappement dans un véhicule automobile (100), de préférence dans un véhicule automobile hybride, en particulier dans un véhicule automobile hybride rechargeable, le dispositif présentant :
- un dispositif de diagnostic embarqué (205) ayant une fonction de diagnostic embarqué (110) pour un diagnostic embarqué d'une capacité de fonctionnement d'un dispositif affectant les gaz d'échappement du véhicule automobile (100),
- un dispositif de surveillance (210) pour surveiller la fonction de diagnostic embarqué (110) du dispositif de diagnostic embarqué (205) du véhicule automobile (100),
- un dispositif (220) pour prévoir un compteur de déplacements (120), le compteur de déplacements (120) indiquant un nombre de cycles de conduite du véhicule automobile (100), le dispositif (220) pour prévoir le compteur de déplacements (120) étant aménagé pour permettre une incrémentation du compteur de déplacements (120),
- un dispositif (230) pour prévoir un compteur de diagnostics (130) pour la fonction de diagnostic embarqué (110) du véhicule automobile (100) impliquée dans la surveillance (10), le dispositif (230) pour prévoir le compteur de diagnostics (130) étant aménagé pour permettre une incrémentation du compteur de diagnostics (130) de la fonction de diagnostic embarqué (110),
- un dispositif (240) pour prévoir une valeur théorique de fréquence de diagnostic (140),
- un dispositif (260) pour former une valeur de fréquence de diagnostic (160) au moyen d'une combinaison adéquate du compteur de diagnostics (130) et du compteur de déplacements (120),
- un dispositif de comparaison (250) pour comparer la valeur réelle de fréquence de diagnostic (160) avec la valeur théorique de fréquence de diagnostic (140),
- un dispositif de sélection (270) pour sélectionner (70) un dispositif de commande (170) parmi un groupe de procédés de commande, chaque procédé de commande (170) du groupe de procédés de commande indiquant un pilotage de moteur correspondant d'un moteur d'entraînement du véhicule automobile (100), et le procédé de commande (170) sélectionné étant adapté pour achever avec succès un diagnostic embarqué actuellement en cours de la fonction de diagnostic embarqué (110) et pour déclencher et achever avec succès un diagnostic embarqué non en cours de la fonction de diagnostic embarqué (110), et
- un dispositif (280) pour réinitialiser le pilotage de moteur sur un pilotage de moteur d'origine selon un état avant la sélection (70) du procédé de commande (170),
**caractérisé en ce que** le dispositif (200) pour l'assurance qualité du comportement des gaz d'échappements dans le véhicule automobile (100) est aménagé pour effectuer un procédé selon l'une quelconque des revendications précédentes.

16. Véhicule automobile (100), présentant un dispositif (200) selon la revendication 15.

17. Produit de programme informatique pour un dispositif (200) selon la revendication 15 qui peut fonctionner selon un procédé selon l'une quelconque des revendications 1 à 14.

18. Support de données, présentant un produit de programme informatique selon la revendication 17.
